# EUROPEAN PATENT APPLICATION

(11) **EP 4 353 588 A1**
(43) Date of publication of application: **17.04.2024**
(21) Application number: 23196722.5
(22) Date of filing: 12.09.2023
(51) Int. Cl.: B64C 25/44

(54) **AN AIRCRAFT BRAKING SYSTEM**

(30) Priority: 12.10.2022 GB 202215060
(71) Applicant: Airbus Operations Limited, Bristol BS34 7PA (GB)
(72) Inventor: PLATT, Ian, Bristol, BS34 7PA (GB); SADLER, Andrew, Bristol, BS34 7PA (GB)
(74) Representative: Pilcher, Adam

(57) **Abstract**

Disclosed is an aircraft braking system 100 comprising a plurality of brakes 25, 26, 35, 36, 25', 26', 35', 36' each for braking one of a plurality of aircraft wheels 23, 24, 33, 34 using hydraulic pressure, a first hydraulic pressure supply unit 310, and a second hydraulic pressure supply unit 320 , wherein the first hydraulic pressure supply unit is connected to only a first subset 25 of the plurality of brakes, such that the first hydraulic pressure supply unit can enable only the first subset of the plurality of brakes to provide braking, and wherein the second hydraulic pressure supply unit is connected to only a second subset 26 of the plurality of brakes, the second subset not including any of the brakes of the first subset, such that the second hydraulic pressure supply unit can enable only the second subset of the plurality of brakes to provide braking. Also disclosed is an aircraft landing gear 10, 20, 30 and a method of operating the aircraft braking system 100.

## Description

### TECHNICAL FIELD

The present invention relates to an aircraft braking system, an aircraft landing gear and a method of operating the aircraft braking system.

### BACKGROUND

Existing aircraft braking systems generally rely on supply of hydraulic power from a central aircraft supply (i.e. a hydraulic supply on the aircraft used to supply hydraulic power to all required systems all around the aircraft). They also generally are connected to a back-up (secondary) hydraulic power supply, to allow for redundancy of supply and prevent braking failure in the event of the primary hydraulic power supply failing. The secondary hydraulic power supply is also a centralised system, able to provide back-up hydraulic power to all required systems on the aircraft. US 5397173 discloses an example of such an arrangement.

US 5456523 discloses a slight variation on the arrangement described above. Here, the pairs of brakes are still connected to both of the two centralised supplies. However, one of the centralised supplies supplies hydraulic power to a first pair of brakes and the other centralised supply supplies hydraulic power to a second pair of brakes during normal operation. If one of the centralised supplies fail, the affected pair of brakes then receives a back-up supply from the other centralised hydraulic supply that it is connected to.

Both of these arrangements require a high number of components (e.g. pressure regulating valves and selector valves) as well as a large length of hydraulic piping. For example, the hydraulic piping (for both hydraulic supplies) would need to extend from the central supply, for example in the wing, and down both gears to reach the brakes. Hence, they are complicated systems that are heavy and require significant maintenance to appropriately service all the components.

The present invention seeks to mitigate the above-mentioned problems. Alternatively or additionally, the present invention seeks to provide an improved aircraft braking system.

### SUMMARY

A first aspect of the present invention provides an aircraft braking system comprising a plurality of brakes, each for braking one of a plurality of aircraft wheels using hydraulic pressure, a first hydraulic pressure supply unit, and a second hydraulic pressure supply unit, wherein the first hydraulic pressure supply unit is connected to only a first subset of the plurality of brakes, such that the first hydraulic pressure supply unit can enable only the first subset of the plurality of brakes to provide braking, and wherein the second hydraulic pressure supply unit is connected to only a second subset of the plurality of brakes, the second subset not including any of the brakes of the first subset, such that the second hydraulic pressure supply unit can enable only the second subset of the plurality of brakes to provide braking.

The first hydraulic pressure supply unit is entirely separate from the brakes that are not part of the first subset. The first hydraulic pressure supply unit is not connected to any of the brakes that are not part of the first subset of brakes, not even connected by a closed connection, for example a selector valve. The second hydraulic pressure supply unit is entirely separate from the brakes that are not part of the second subset. The second hydraulic pressure supply unit is not connected to any of the brakes that are not part of the second subset of brakes, not even connected by a closed connection, for example a selector valve.

There may be N number of wheels, each having two brakes and so 2N brakes. The first hydraulic pressure supply unit may be connected to, for example, only 2N-1, or N, or 1 of the brakes. The second hydraulic pressure supply unit may be connected to, for example, only 2N-1, or N, or 1 of the brakes. For example, a first hydraulic pressure supply unit may be connected to a first brake on one wheel and a second brake on a second wheel. If there are 4 wheels, each with two brakes, there may be four similar hydraulic pressure supply units, each one connected to two brakes, on different wheels. Alternatively, a first hydraulic pressure supply unit may be connected to only a single brake on one wheel. If there are 4 wheels, each with two brakes, there may be eight similar hydraulic pressure supply units, each connected to one of the brakes.

Such a braking system enables the first hydraulic supply unit to be used only for supplying hydraulic pressure to the first subset of brakes (which may be only a single brake). In other words, the first hydraulic pressure supply unit is a dedicated supply of the first subset of brakes. It may be designed (e.g. sized) to provide only hydraulic pressure to the first subset of brakes and not designed (e.g. sized) to provide hydraulic pressure to anywhere else, including any other brakes, even in an emergency/back-up situation. This enables the first hydraulic supply unit to be smaller and lighter. This enables the first hydraulic supply unit to be localised in the vicinity of the first subset of brakes (and not be part of a centralised aircraft hydraulic pressure supply). This enables the first hydraulic pressure supply unit to be able to supply to the first subset of brakes with much shorter hydraulic lines, which further reduces weight, complexity and efficiency. The first hydraulic pressure supply unit may also contain less components, reducing manufacture and maintenance costs and reducing the likelihood of failures.

Similarly, such a braking system enables the second hydraulic supply unit to be used only for supplying hydraulic pressure to the second subset of brakes (which may be only a single brake). In other words, the second hydraulic pressure supply unit is a dedicated supply of the second subset of brakes. It may be designed (e.g. sized) to provide only hydraulic pressure to the second subset of brakes and not designed (e.g. sized) to provide hydraulic pressure to anywhere else, including any other brakes, even in an emergency/back-up situation. This enables the second hydraulic supply unit to be smaller and lighter. This enables the second hydraulic supply unit to be localised in the vicinity of the second subset of brakes (and not be part of a centralised aircraft hydraulic pressure supply). This enables the second hydraulic pressure supply unit to be able to supply to the second subset of brakes with much shorter hydraulic lines, which further reduces weight, complexity and efficiency. The second hydraulic pressure supply unit may also contain less components, reducing manufacture and maintenance costs and reducing the likelihood of failures.

The first and second hydraulic pressure supply units may be part of a set of hydraulic pressure supplies for supplying hydraulic pressure to the brakes during a mode of operation. The mode of operation may be a normal mode of operation. The mode of operation may be an emergency/back-up mode of operation.

Preferably, the first hydraulic pressure supply unit is localised in the vicinity of the first subset of brakes and wherein the second hydraulic pressure supply unit is localised in the vicinity of the second subset of brakes.

Hence, the first and second hydraulic supply units may not be part of a centralised aircraft hydraulic pressure supply. They may be located on the relevant landing gear leg of the aircraft, corresponding to the brake subset location. They may be located on the relevant wheel axle of the aircraft, corresponding to the brake subset location. They may be located within the relevant wheel, corresponding to the brake subset location. For example, the first subset of brakes may comprise a single brake for a single wheel, mounted on an axle, mounted on a landing gear leg. The first hydraulic pressure supply unit may be located within that wheel, on that wheel axle, or that landing gear leg.

In the vicinity means located preferably within 5 metres, and more preferably within 2 metres, or 1 metre.

This means that the pressurised hydraulic fluid is close to where it is needed (i.e. near the subset of brakes) and thus, reduce the length of hydraulic line needed (from the outlet to the brakes).

Having localised hydraulic pressure supply units provides the potential for the distribution of functions across the brakes, such as storage of hydraulic power for applying park brake and the distribution of antiskid logic to each supply unit.

More preferably, the first hydraulic pressure supply unit comprises an electrical input, for receiving electrical power, a hydraulic fluid reservoir, for storing hydraulic fluid, and a hydraulic fluid outlet, for supplying hydraulic fluid, wherein the first hydraulic pressure supply unit is configured to receive electrical power at the input and, during a supply phase, supply hydraulic fluid from the reservoir at the outlet.

Such a supply unit is capable of storing hydraulic fluid locally (i.e. within the unit), using electrical power. This means that the hydraulic fluid can be stored close to where it is needed (i.e. near the subset of brakes) and thus, reduce the length of hydraulic line needed (from the outlet to the brakes). Distribution of the hydraulic reservoirs across the supply units is a further opportunity to reduce weight.

The first hydraulic pressure supply unit may comprise a hydraulic pump for pumping hydraulic fluid out of the reservoir. This enables the hydraulic fluid to be supplied under pressure at the hydraulic fluid outlet. Alternatively, or additionally, the hydraulic fluid reservoir may be an accumulator for storing pressurised hydraulic fluid. Here, there may be a hydraulic pump for pumping pressurised hydraulic fluid into the accumulator. For example, in a converting phase, the hydraulic pump may use electrical power to operate the hydraulic pump to pump hydraulic fluid into the reservoir. That fluid may be supplied at the hydraulic fluid outlet without using a hydraulic fluid pump.

Similarly, the second hydraulic pressure supply unit may comprise an electrical input, for receiving electrical power, a hydraulic fluid reservoir, for storing hydraulic fluid, and a hydraulic fluid outlet, for supplying hydraulic fluid, wherein the first hydraulic pressure supply unit is configured to receive electrical power at the input and, during a supply phase, supply hydraulic fluid from the reservoir at the outlet.

Such a supply unit is capable of storing hydraulic fluid locally (i.e. within the unit), using electrical power. This means that the hydraulic fluid can be stored close to where it is needed (i.e. near the subset of brakes) and thus, reduce the length of hydraulic line needed (from the outlet to the brakes). Distribution of the hydraulic reservoirs across the supply units is a further opportunity to reduce weight.

The second hydraulic pressure supply unit may comprise a hydraulic pump for pumping hydraulic fluid out of the reservoir. This enables the hydraulic fluid to be supplied under pressure at the hydraulic fluid outlet. Alternatively, or additionally, the hydraulic fluid reservoir may be an accumulator for storing pressurised hydraulic fluid. Here, there may be a hydraulic pump for pumping pressurised hydraulic fluid into the accumulator. For example, in a converting phase, the hydraulic pump may use electrical power to operate the hydraulic pump to pump hydraulic fluid into the reservoir. That fluid may be supplied at the hydraulic fluid outlet without using a hydraulic fluid pump.

Even more preferably, the first hydraulic pressure supply unit further comprises an input for receiving a braking control command, wherein the unit is configured to operate in the supply phase by providing an amount of (pressurised) hydraulic fluid from the reservoir at the outlet, in response to the braking control command.

The pressure of the hydraulic fluid may be controlled or regulated using a pressure valve within the first hydraulic supply unit. Alternatively or additionally, there may be a separate system (after the hydraulic fluid outlet) that controls or regulates the pressure of the hydraulic fluid provided. The first hydraulic pressure supply unit may comprise two inputs for receiving two separate braking control commands, for example, from two different braking control computers, and/or two different electrical supplies, for redundancy.

Similarly, the second hydraulic pressure supply unit may further comprise an input for receiving a braking control command, wherein the unit is configured to operate in the supply phase by providing an amount of (pressurised) hydraulic fluid from the reservoir at the outlet, in response to the braking control command. The pressure of the hydraulic fluid may be controlled or regulated using a pressure valve within the second hydraulic supply unit. Alternatively or additionally, there may be a separate system (after the hydraulic fluid outlet) that controls or regulates the pressure of the hydraulic fluid provided. Similarly, the second hydraulic pressure supply unit may comprise two inputs for receiving two separate braking control commands, for example, from two different braking control computers, and/or two different electrical supplies, for redundancy.

Preferably, the system is configured to have two modes of operation and that, during a first mode of operation, the first hydraulic pressure supply unit supplies hydraulic pressure to the first subset of the plurality of brakes and the second hydraulic pressure supply unit supplies hydraulic pressure to the second subset of the plurality of brakes.

In other words, the two hydraulic supply units are used at the same time, simultaneously. They are not alternative supplies, for example a normal supply and a back-up/emergency supply for a given brake. Instead, they are both supplies intended to be used to provide hydraulic pressure (only) to their respective subset of brakes. The first mode of operation may be a normal mode of operation. The first mode of operation may be an emergency/back-up mode of operation.

More preferably, the system comprises an alternative hydraulic pressure supply, and wherein, during a second mode of operation, the first and/or second subset of brakes is supplied with hydraulic pressure from the alternative hydraulic pressure supply. The second mode of operation may be an emergency/back-up mode of operation, for example if there was a failure of the first or second hydraulic pressure supply unit. The second mode of operation may be a normal mode of operation.

The alternative hydraulic pressure supply is different from both the first and second hydraulic pressure supply units. In other words, the supply from the first and/or second hydraulic supply units is/are instead replaced with a different supply (not from the first or second hydraulic pressure supply unit).

The alternative hydraulic pressure supply may comprise a centralised aircraft hydraulic pressure supply.

The centralised aircraft hydraulic pressure supply may be used to supply any of the subsets of brakes in the event that the relevant hydraulic pressure supply unit has failed. The centralised aircraft hydraulic pressure supply may be used to supply all of the brakes in the event that either (any) of the hydraulic pressure supplies have failed. The aircraft braking system may comprise a selector valve to select which hydraulic supply is used to supply the brakes. One or more of the brakes may comprise a dual cavity arrangement to allow the alternative hydraulic pressure supply to be supplied to a separate cavity of the brake than the supply from the first/second hydraulic pressure supply unit.

As an alternative, the alternative hydraulic pressure supply may comprise a further hydraulic pressure supply unit localised in the vicinity of the same subset of brakes.

The further hydraulic pressure supply unit may be a similar or different type than the first/second hydraulic pressure supply unit. There may be a further hydraulic pressure supply unit for each of the first and second subset of brakes. Each brake may comprise a single cavity arrangement for receiving both the alternative hydraulic pressure supply as well as the supply from the first/second hydraulic pressure supply unit (at different times) in the same cavity.

Preferably, the braking system further comprises a third hydraulic pressure supply unit, and a fourth hydraulic pressure supply unit, wherein the third hydraulic pressure supply unit is connected to only a third subset of the plurality of brakes, the third subset not including any of the brakes of the first or second subsets, such that the third hydraulic pressure supply unit enables only the third subset of the plurality of brakes to provide braking, and wherein the fourth hydraulic pressure supply unit is connected to only a fourth subset of the plurality of brakes, the fourth subset not including any of the brakes of the first, second or third subsets, such that the fourth hydraulic pressure supply unit enables only the fourth subset of the plurality of brakes to provide braking.

The third and fourth hydraulic pressure supply units may be similar and have any of the same features, as described above, for the first and second hydraulic pressure supply units.

Preferably, each subset of brakes only comprises one single brake.

In other words, there is no sharing of hydraulic supply units between the brakes and each unit may be localised with respect to its single brake. For example, there may be 4 wheels and 4 corresponding brakes, with 4 corresponding localised hydraulic pressure supply units.

According to a second aspect of the invention, there is provided an aircraft landing gear comprising the aircraft braking system as described above.

According to a third aspect of the invention, there is provided an aircraft landing gear comprising first and second wheels, a first brake for braking the first wheel using hydraulic pressure, a second brake for braking the second wheel using hydraulic pressure, a first hydraulic pressure supply unit, and a second hydraulic pressure supply unit, wherein the first hydraulic pressure supply unit is connected to the first brake, and not connected to the second brake, such that the first hydraulic pressure supply unit can enable only the first brake to provide braking, and wherein the second hydraulic pressure supply unit is connected to the second brake, and not connected to the first brake, such that the second hydraulic pressure supply unit can enable only the second brake to provide braking.

Preferably, the first hydraulic pressure supply unit is localised in the vicinity of the first brake and wherein the second hydraulic pressure supply unit is localised in the vicinity of the second brake.

For example, the first hydraulic pressure supply unit may be located within the first wheel or on the axle of the first wheel or on the landing gear of the first wheel. For example, the second hydraulic pressure supply unit may be located within the second wheel or on the axle of the second wheel (which may also be the axle of the first wheel) or on the landing gear of the second wheel (which may also be the landing gear of the first wheel).

According to a fourth aspect of the invention, there is provided an aircraft comprising the aircraft braking system or aircraft landing gear as described above.

According to a fifth aspect of the invention, there is provided a method of operating the aircraft braking system as described above, comprising the following steps providing the first subset of a plurality of brakes with hydraulic pressure from the first hydraulic pressure supply unit, and providing the second subset of a plurality of brakes with hydraulic pressure from the second hydraulic pressure supply unit, wherein steps i) and ii) occur during a single mode of operation.

In other words, the two hydraulic supply units are used at the same time, simultaneously. They are not alternative supplies, for example a normal supply and a back-up/emergency supply. Instead, they are both supplies intended to be used to provide hydraulic pressure (only) to their respective subset of brakes.

The first subset of brakes may comprising only a single (first) brake. The second subset of brakes may comprises only a single (second) brake.

It will of course be appreciated that features described in relation to one aspect of the present invention may be incorporated into other aspects of the present invention. For example, the method of the invention may incorporate any of the features described with reference to the apparatus of the invention and vice versa.

### BRIEF DESCRIPTION OF THE DRAWINGS

Embodiments of the invention will now be described, by way of example only, with reference to the accompanying drawings, in which:
Figure 1 shows a schematic diagram of an aircraft braking system according to a first embodiment of the invention;
Figure 2 shows a schematic diagram of an aircraft braking system according to a second embodiment of the invention; and
Figure 3 shows an aircraft suitable for using either the aircraft braking system of Figure 1 and/or Figure 2.

### DETAILED DESCRIPTION

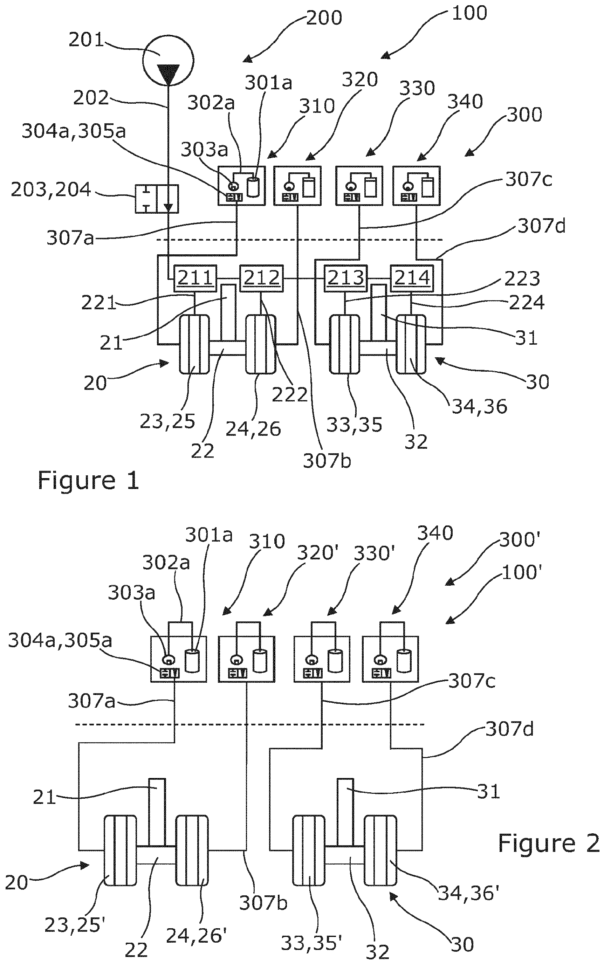

Figure 1 shows a schematic diagram of an aircraft braking system 100 according to a first embodiment of the invention.

The braking system supplies four brakes, each one corresponding to a wheel on a port or starboard landing gear. In particular, the starboard landing gear 20 has a landing gear leg 21 and axle 22, upon which is mounted first 23 and second 24 wheels, each having a corresponding brake (25 and 26 respectively). The port landing gear 30 has a landing gear leg 31 and axle 32, upon which is mounted first 33 and second 34 wheels, each having a corresponding brake (35 and 36 respectively).

The braking system 100 includes a conventional centralised hydraulic supply (denoted generally as 200). This centralised hydraulic supply includes a hydraulic accumulator (not shown) located in a position on an aircraft that is remote from the landing gear (for example, in an aircraft wing). The accumulator is connected to a hydraulic pump 201 that pumps hydraulic fluid from the accumulator into a main hydraulic line 202.

A selector valve 203 on the main line 202 has an open position 204 (as shown in Figure 1) and a closed position 205 (not shown). In the open position 204, for example during normal operation, hydraulic fluid flows through the main line 202 to four servo valves 211, 212, 213, 214. In the closed position, for example during emergency/back-up operation, hydraulic fluid is not able to reach these servo valves. The selector valve 203, therefore, effectively selects whether or not hydraulic fluid is supplied by the centralised system 200. When it is in the closed position, for example during emergency/back-up operation, hydraulic supply is provided through a localised system (denoted generally as 300), which will be described later.

The four servo valves 211, 212, 213, 214 are each associated with and connected to an individual brake line (221, 222, 223, 224 respectively) which are each connected to their respective brake. They control or regulate the pressure provided to each brake.

As shown in Figure 1, servo valve 211 is connected to brake line 221 which is connected to the brake 25 in the first wheel 23 of the starboard landing gear 20. Servo valve 212 is connected to brake line 222 which is connected to the brake 26 in the second wheel 24 of the starboard landing gear 20. Servo valve 213 is connected to brake line 223 which is connected to the brake 35 in the first wheel 33 of the port landing gear 30. Servo valve 214 is connected to brake line 224 which is connected to the brake 36 in the second wheel 34 of the port landing gear 30.

The localised hydraulic supply system 300 will now be described.

The localised hydraulic supply system 300 comprises four individual hydraulic units 310, 320, 330, 340. Each of these units is associated with a corresponding brake 24, 26, 34, 36 (respectively) of the braking system 100 and is only connected to its corresponding brake. None of them are connected to any other brake or any other unit that requires hydraulic supply. Hence, each unit can be designed and sized to provide just the corresponding brake with hydraulic supply.

The first individual hydraulic unit 310 is connected to a brake line 307a that connects it to its corresponding brake 25 in wheel 23. The second individual hydraulic unit 320 is connected to a brake line 307b that connects it to its corresponding brake 26 in wheel 24. The third individual hydraulic unit 330 is connected to a brake line 307c that connects it to its corresponding brake 35 in wheel 33. The fourth individual hydraulic unit 340 is connected to a brake line 307d that connects it to its corresponding brake 36 in wheel 34.

The first individual hydraulic unit 310 will be described but the other units 320, 330, 340 are similar.

Unit 310 comprises a hydraulic fluid reservoir 301a. It is this reservoir that is sized for the amount of hydraulic supply required by the brake 25. The reservoir is connected from an outlet of the unit 310 by a main line 302a to brake 25.

The main line 302a comprises a pump 303a that is able to pump the hydraulic fluid from the reservoir 301a through the main line 302a.

The main line 302a also comprises a selector valve 304a. It has an open position 305a (as shown in Figure 1) and a closed position 306 (not shown). In the open position 305a, for example during emergency/back-up operation, hydraulic fluid flows through the main line 302a to the brake 25. The selector valve 304a, therefore, effectively selects whether or not hydraulic fluid is supplied by the localised unit 310.

When the selector valve 304a is in the closed position, for example during normal operation, hydraulic supply is provided through the centralised system (denoted generally as 200), described earlier. When it is in its open position, for example during emergency/back-up operation (for example, because the centralised system 200 has failed), hydraulic supply is also provided to the other brakes 26, 35, 36 through the other corresponding localised units 320, 330, 340.

The localised unit 310 also comprises an electrical input (not shown) which provides power to drive the pump 303a.

The localised unit 310 also comprises a brake control command input (not shown) which is used to control the position of the selector valve 304a and the amount of hydraulic fluid supplied to the brake 25 through the main line 302a. It also provides a signal to provide pressure to maintain the brake during aircraft parking. The unit 310 also comprises a second brake control command input so it can also receive a second signal from a dissimilar brake control computer, for example using a separate electrical supply.

Figure 1 shows the location of the unit 310 schematically. The unit 310 is located on the landing gear leg 21 of the starboard landing gear 20.

Each brake 24, 25, 34, 36 is a dual cavity brake to separate the two hydraulic supplies for each brake. Each brake has two sets of brake actuators; one for each system (localised and centralised).

Figure 2 shows a schematic diagram of an aircraft braking system 100' according to a second embodiment of the invention.

The aircraft braking system 100' is very similar to that of Figure 1, and only the differences will be described. Like elements will keep the same numbering as Figure 1. Similar but modified elements will be numbered with a ' after the relevant numeral.

The aircraft braking system 100' of Figure 2 does not include the centralised hydraulic supply system 200 of Figure 1. Hence, the pump 201, hydraulic line 202, selector valves 203, servo valves 211, 212, 213, 214 and brake lines 221, 222, 223, 224 are all removed.

However, in order to give safety reassurances/redundancy, two of the four localised hydraulic units of the localised system 300' are of a different type to the other two. In particular, localised hydraulic units 320' and 330' are a different type to that of the corresponding units (320 and 330) in Figure 1 and the other two units 310, 340 in the second embodiment. Hence, if one type of localised hydraulic unit failed, there would still be braking capability in one brake of each main landing gear 20, 30.

The brakes 24', 26', 34', 36' here are single cavity, which saves further weight.

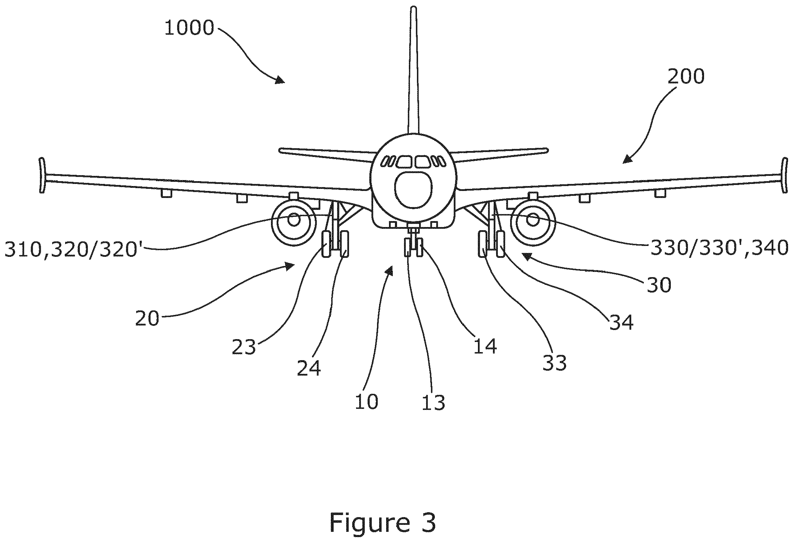

Figure 3 shows an aircraft 1000 suitable for using either the aircraft braking system of Figure 1 and/or Figure 2.

The aircraft 1000 has a nose landing gear 10 including nose wheels 13 and 14, a port main landing gear 30 with wheels 33 and 34 and starboard main landing gear 20 with wheels 23 and 24.

The aircraft 1000 is provided with the localised hydraulic units 300 of the systems of Figure 1 and/or Figure 2. A first localised hydraulic unit 310 is provided on the starboard landing gear leg 21 and supplies hydraulic supply to the brake of wheel 23. A second localised hydraulic unit 320 (or 320') is provided on the starboard landing gear leg 21 and supplies hydraulic supply to the brake of wheel 24. A third localised hydraulic unit 330 (or 330') is provided on the port landing gear leg 31 and supplies hydraulic supply to the brake of wheel 33. A fourth localised hydraulic unit 340 is provided on the port landing gear leg 31 and supplies hydraulic supply to the brake of wheel 34.

The aircraft 1000, if using the aircraft braking system of Figure 1, includes the accumulator of the centralised hydraulic supply 200 in at least one of its wings. Such hydraulic supply is supplied to all of the brakes in wheels 23, 24, 33, 34 through hydraulic piping travelling from the accumulator to those brakes.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The localised units 310, 320, 320', 330, 330', 340 may be located in any suitable location, for example on or in the respective landing gear leg, on or in the respective axle, or on or in the respective wheel, and/or adjacent the corresponding brake.

The localised units 310, 320, 320', 330, 330', 340 may have an accumulator as a reservoir 301a etc. and may comprise a hydraulic pump to pump pressurised hydraulic fluid into the accumulator. This pump may also be able to pump fluid from the accumulator.

The centralised system may use a reservoir instead of an accumulator.

There may be any suitable number of wheels, brakes and landing gear. There may be more than one brake per wheel. There may be less brakes than there are wheels (i.e. not every wheel having a corresponding brake).

In the above examples, the braking system has been for braking main landing gear wheels. The invention may be applied (as well or instead) to braking nose landing gear wheels.

The emergency/back-up and normal supplies may be the other way round in the first embodiment. For example, the centralised system 200 may be used during emergency/back-up operation (i.e. when the localised system has failed) and the localised system 300 being used during a normal operation.

Instead of a centralised system 200, a duplicate localised system (300 or 300') may be used in the first embodiment.

Instead of just one localised system 300' in the second embodiment, there may be two (duplicate) localised systems (using a combination of 300 or 300') in the second embodiment. There could be one localised unit of each type associated with and connected to each brake.

As a further alternative/addition, the localised units could each be connected to at least two brakes, on different wheels. For example, a first hydraulic pressure supply unit may be connected to a first brake on one wheel and a second brake on a second wheel. If there are 4 wheels, each with two brakes, there may be four similar hydraulic pressure supply units, each one connected to two brakes, on different wheels. Alternatively, a first hydraulic pressure supply unit may be connected to only a single brake on one wheel. If there are 4 wheels, each with two brakes, there may be eight similar hydraulic pressure supply units, each connected to one of the brakes.

The above embodiments are to be understood as illustrative examples of the invention. Equivalents and modifications not described above may also be employed without departing from the scope of the invention, which is defined in the accompanying claims.

It is to be understood that any feature described in relation to any one embodiment may be used alone, or in combination with other features described, and may also be used in combination with one or more features of any other of the embodiments, or any combination of any other of the embodiments.

It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

It should be noted that throughout this specification, "or" should be interpreted as "and/or".

Although the invention has been described above mainly in the context of a fixed-wing aircraft application, it may also be advantageously applied to various other applications, including but not limited to applications on vehicles such as helicopters, drones, trains, automobiles and spacecraft.

## Claims

1. An aircraft braking system comprising:
- a plurality of brakes, each for braking one of a plurality of aircraft wheels using hydraulic pressure,
- a first hydraulic pressure supply unit, and
- a second hydraulic pressure supply unit,
wherein the first hydraulic pressure supply unit is connected to only a first subset of the plurality of brakes, such that the first hydraulic pressure supply unit can enable only the first subset of the plurality of brakes to provide braking, and
wherein the second hydraulic pressure supply unit is connected to only a second subset of the plurality of brakes, the second subset not including any of the brakes of the first subset, such that the second hydraulic pressure supply unit can enable only the second subset of the plurality of brakes to provide braking.

2. An aircraft braking system as claimed in claim 1, wherein the first hydraulic pressure supply unit is localised in the vicinity of the first subset of brakes and wherein the second hydraulic pressure supply unit is localised in the vicinity of the second subset of brakes.

3. An aircraft braking system as claimed in claim 2, wherein the first hydraulic pressure supply unit comprises:
- an electrical input, for receiving electrical power,
- a hydraulic fluid reservoir, for storing hydraulic fluid, and
- a hydraulic fluid outlet, for supplying hydraulic fluid,
wherein the first hydraulic pressure supply unit is configured to receive electrical power at the input and, during a supply phase, supply hydraulic fluid from the reservoir at the outlet.

4. An aircraft braking system as claimed in claim 3, wherein the first hydraulic pressure supply unit further comprises:
- an input for receiving a braking control command,
wherein the unit is configured to operate in the supply phase by providing an amount of hydraulic fluid from the reservoir at the outlet, in response to the braking control command.

5. An aircraft braking system as claimed in any preceding claim, wherein, the system is configured to have two modes of operation and that, during a first mode of operation, the first hydraulic pressure supply unit supplies hydraulic pressure to the first subset of the plurality of brakes and the second hydraulic pressure supply unit supplies hydraulic pressure to the second subset of the plurality of brakes.

6. An aircraft braking system as claimed in claim 5, wherein the system comprises an alternative hydraulic pressure supply, and wherein, during a second mode of operation, the first and/or second subset of brakes is supplied with hydraulic pressure from the alternative hydraulic pressure supply.

7. An aircraft braking system as claimed in claim 6, wherein, the alternative hydraulic pressure supply comprises a centralised aircraft hydraulic pressure supply.

8. An aircraft braking system as claimed in claim 6, wherein, the alternative hydraulic pressure supply comprises a further hydraulic pressure supply unit localised in the vicinity of the same subset of brakes.

9. An aircraft braking system as claimed in any preceding claim, wherein the braking system further comprises:
- a third hydraulic pressure supply unit, and
- a fourth hydraulic pressure supply unit,
wherein the third hydraulic pressure supply unit is connected to only a third subset of the plurality of brakes, the third subset not including any of the brakes of the first or second subsets, such that the third hydraulic pressure supply unit enables only the third subset of the plurality of brakes to provide braking, and
wherein the fourth hydraulic pressure supply unit is connected to only a fourth subset of the plurality of brakes, the fourth subset not including any of the brakes of the first, second or third subsets, such that the fourth hydraulic pressure supply unit enables only the fourth subset of the plurality of brakes to provide braking.

10. An aircraft braking system as claimed in any preceding claim, wherein each subset of brakes only comprises one single brake.

11. An aircraft landing gear comprising the aircraft braking system of any preceding claim.

12. An aircraft landing gear comprising:
- first and second wheels,
- a first brake for braking the first wheel using hydraulic pressure,
- a second brake for braking the second wheel using hydraulic pressure,
- a first hydraulic pressure supply unit, and
- a second hydraulic pressure supply unit,
wherein the first hydraulic pressure supply unit is connected to the first brake, and not connected to the second brake, such that the first hydraulic pressure supply unit can enable only the first brake to provide braking, and
wherein the second hydraulic pressure supply unit is connected to the second brake, and not connected to the first brake, such that the second hydraulic pressure supply unit can enable only the second brake to provide braking.

13. An aircraft landing gear as claimed in claim 12, wherein the first hydraulic pressure supply unit is localised in the vicinity of the first brake and wherein the second hydraulic pressure supply unit is localised in the vicinity of the second brake.

14. An aircraft comprising the aircraft braking system or aircraft landing gear of any preceding claim.

15. A method of operating the aircraft braking system of any of claims 1 to 10, comprising the following steps:
i) providing the first subset of a plurality of brakes with hydraulic pressure from the first hydraulic pressure supply unit, and
ii) providing the second subset of a plurality of brakes with hydraulic pressure from the second hydraulic pressure supply unit,
wherein steps i) and ii) occur during a single mode of operation.
